# EUROPÄISCHE PATENTSCHRIFT

(11) **EP 2 356 045 B1**
(45) Veröffentlichungstag und Bekanntmachung des Hinweises auf die Patenterteilung: **01.10.2014**
(21) Anmeldenummer: 09795693.2
(22) Anmeldetag: 03.12.2009
(51) Int. Cl.: B65G 1/127

(54) **UMLAUFREGAL MIT HILFSANTRIEB**
STORAGE CAROUSEL HAVING AN AUXILIARY DRIVE
RAYONNAGE MOBILE À ENTRAÎNEMENT AUXILIAIRE

(43) Veröffentlichungstag der Anmeldung: 17.08.2011
(73) Patentinhaber: Kardex Produktion Deutschland GmbH, 86476 Neuburg/Kammel (DE)
(72) Erfinder: PRESCHKE, Harald, 89269 Vöhringen (DE)
(74) Vertreter: Grünecker, Kinkeldey, Stockmair & Schwanhäusser
(86) Internationale Anmeldenummer: PCT/EP2009/008635
(87) Internationale Veröffentlichungsnummer: WO 2011/066845

(56) Entgegenhaltungen:
- FR-A1- 2 702 201
- FR-A1- 2 920 751
- JP-A- 8 324 713
- US-A1- 2003 098 207

## Beschreibung

Die Erfindung betrifft ein Umlaufregal mit den oberbegrifflichen Merkmalen des Anspruchs 1.

Umlaufregale sind dynamische Lagereinrichtungen mit bis zu 15 und mehr Metern Höhe, die Traglasten bis in den Tonnenbereich aufnehmen können. Um eine ausreichende Sicherheit für den Bediener zu gewährleisten, müssen die Einrichtungen hohen Sicherheitsanforderungen gerecht werden. Um beispielsweise auch bei Stromausfall oder bei Versagen der Steuerung auf die eingelagerten Gegenstände zugreifen zu können und um die Sicherheit des Bedienpersonals sicherzustellen, weisen Umlaufregale In der Regel Einrichtungen auf, die einen manuellen Betrieb des Motors, beispielsweise über eine Handkurbel o. dgl. ermöglichen. Als Antrieb für die Umleufregale werden herkömmlicherweise Motoren mit Schneckengetriebe und einer Motorbremse eingesetzt. Wird hier im manuellen Betrieb die Bremse gelüftet, kann bei ausreichend hoher Obersetzung des Getriebes der Motor nicht von der am Getriebeausgang wirkenden Kraft angetrieben werden, sodass das Umlaufregal ohne Rückwirkung auf den Bediener manuell betrieben werden konnte.

Weiterentwicklungen auf dem Gebiet der Lagertechnik sind auch auf Einsparung von Energiekosten beim Betrieb der Regalsysteme gerichtet. Derartige Ansätze erfordern zunehmend den Einsatz von Getrieben mit hohen Wirkungsgraden, beispielsweise von Stirn- oder Kegelradgetrieben. Im Gegensatz zu Schneckengetrieben weisen diese Getriebe jedoch meist keine Selbsthemmung auf. Vor allem bei vertikalen Umlaufregalen (Paternostem) mit hohen Nutzlasten wirkt daher nach dem Öffnen der Bremse eine unvorhersehbare Kraft auf den Hilfsantrieb, der beispielsweise in Form einer an den Antriebsmotor ansteckbaren Kurbel ausgebildet sein kann, und stellt damit eine Gefahr für den Bediener dar. Die Gefährdung nimmt noch weiter zu, wenn aufgrund der nicht einsehbaren Lastverteilung in den Lagergutträgern des Umlaufregals die Kraftrichtung nicht ersichtlich ist.

Sicherungsmechanismen for umlaufenco Lasten werden beispielsweise beim Betrieb von Rolltoren verwendet. So zeigt beispielsweise die DE 40 10 847 A1 eine gattungsgemäße Antriebsvorrichtung für ein vertikal verstellbares Rolltor mit einem Elektromotor und einem damit gekoppelten, eine Abtriebswelle aufweisenden Schneckengetriebe, bei dem ein handbetätigbarer, mit der Antriebswelle koppeibarer Haspelantrieb vorgesehen ist. Um zu vermeiden, dass das Rolltor bei manuellem Betrieb unkontrolliert abgelassen wird, ist der Haspelantrieb mit einer Rücklauf- oder Lastmomentsperre versehen und zudem ein manuell betätigbarer Hebel vorgesehen, der in eine Stellung bringbar ist, in der er den Haspelantrieb mit der Antriebswelle kuppelt und gleichzeitig den Lüfthebel der Bremse in Lüftstellung hält.

Im Gegensatz zu Umlaufregalen benötigt die vorgestellte Vorrichtung keine Sicherung des Rolltores in Heberichtung. Zudem ist die Drehrichtung der Antriebsvorrichtung vorgegeben und für den Bedlener klar ersichtlich. Bei Umlaufregalen ist dies nicht der Fall, da die Drehrichtung abhängig von der Lastbeaufschlagung der Lagergutträger ist, die durch den Bediener oftmals nicht eingesehen werden kann. Nachteilig an der gezeigten Vorrichtung ist zudem, dass die Rücklauf- oder Lastmomenteperre und der manuell betätigbare Hebel als gesondert an der Antriebsvorrichtung angeordnetes, mechanisches Anbautell vorgesehen ist, dass die gesamte Anlage verkompliziert und einen erhöhten Wartungsaufwand mit sich bringt.

Aufgabe der vorliegenden Erfindung ist es daher, ein Umlaufregal mit verbessertem Bedienerschutz zur Verfügung zu stellen, das über eine gesicherte Bremse für Antriebe ohne selbsthemmende Getriebe verfügt, wobei die Bremse erst nach Betätigung des Hilfsantriebes in Kraftrichtung gelöst wird. Hierdurch soll eine durch die Lastverteilung ausgelöste unkontrollierbare Bewegung des Antriebsmotors und die Einleitung von Kraft in einen Hilfsantrieb sowie ein damit verbundenes unbeabsichtigtes Umlaufen der Lagergutträger verhindert werden.

Die Aufgabe wird gelöst durch ein Umlaufregal mit den Merkmalen des Anspruchs 1. Vorteilhafte Weiterbildungen der Erfindung sind Gegenstand der abhängigen Ansprüche.

Das erfindungsgemäße Umlaufregal verfügt über einen Antriebsmotor mit einer lüftbaren Bremse und einem an der Welle des Antriebsmotors anbringbaren, insbesondere zwei Drehrichtungen aufweisenden Hilfsantrieb. Der Hilfsantrieb kann dabei entweder bei Bedarf an den Antriebsmotor angekoppelt werden oder aber dauerhaft mit diesem verbunden sein. Das Umlaufregal kann somit auch bei Stromausfall oder bei Versagen der Antriebssteuerung durch den Bediener bewegt werden, was Insbesondere in Krankenhäusern vorgeschrieben Ist. Das Umlaufregal ist dadurch gekennzeichnet, dass ein auf der Welle des Antriebsmotors oder zentrisch zur Welle angeordneter, mit einer Betätigungseinrichtung für die Bremse gekoppelter Träger vorgesehen ist. Der Träger ist dabei quer zur Welle verschwenkbar angeordnet und die Bremse durch Verschwenkung des Trägers mit Beaufschlagung der Betätigungseinrichtung lüftbar ausgebildet. Zusätzlich ist auf dem Wellenende zur Kraftübertragung vom Hilfsantrieb auf die welle ein Zahn- oder Kettenrad bzw. Riemenantrieb als Vorgelege angeordnet. Dieses ist Ober den Hilfsantrieb, der bevorzugt als Kurbel, Handrad oder Hilfsmotor ausgebildet ist, angetrieben wird. Der Hilfsantrieb kann unabhängig von der Ausführung, fest mit der Antriebseinheit bzw. dem Antriebsmotor verbunden sein oder aber erst im Notfall angekoppelt werden. Vorteilhafterweise ist der Träger als Platte oder Ronde ausgebildet, denkbar sind jedoch auch Ausführungen in Form eines leistenförmigen Lenkers, eines Bügels oder einer Schiene.

Über die Betätigungseinrichtung wird die Bremse geöffnet, Indem beispielsweise ein bevorzugt vorgesehener Hebel zum Lüften der Bremse In Richtung des Trägers bewegt wird. Diese Betätigung des Hebels erfolgt Ober die die Betätigungseinrichtung bildenden mechanischen Verbindungselemente. Diese sind in einer vorteilhaften Ausführungeform der Erfindung als Seilzüge ausgebildet. Daneben können jedoch auch mit dem Träger gekoppelte Gestänge, Nockenecheiben oder sonstige Betätigungselemente, über die eine Schwenkbewegung in eine Linearbewegung umgesetzt wird, verwendet werden. Seilzüge werden Ober antriebsmotorseitige Rollen umgelenkt, wobei hierdurch die Schwenkbewegung des Trägers in eine lineare Bewegung des Hebels oder sonstige Betätigungselemente für die Lüftung der Bremse übersetzt wird. Als günstig wird in diesem Zusammenhang angesehen, wenn die Umlenkrollen aufrechtstehend benachbart zum Träger angeordnet sind. Die Rollenoberfläche ist dabei parallel zur Oberfläche des Antriebsmotors bzw. der Antriebseinheit ausgerichtet, Um möglichst kurze Wege der Betätigungselemente und ein schnelles Ansprechen auf die Verschwenkung des Trägers zu garantieren, weist zum einen der Bremshebel eine ausreichende Hebellänge auf, zum anderen verfügen die Betätigungselemente über zusätzliche Einstellalemente wie beispielsweise Stellschrauben. Bei der Verwendung von Seilzügen werden diese beispielsweise mittels Klemmschrauben am Träger befestigt. Zum Einstellen der Sellzuglänge bzw. zum Justieren des Spiels des Bremshebels werden die Seilzüge am Träger gelöst und nach dem Einstellen wieder geklemmt.

Die Betätigungseinrichtung ist darauf ausgelegt, dass bereits eine geringe Verschwenkung des Trägers um 1 bis 10°, Insbesondere um 1 bis 8°, bevorzugt um 1 bis 5° ausreicht, um die Bremse zu lüften. Dabei weist der Träger (in Form einer Platte) zwei Schwenkrichtungen auf, so dass die Betätigungseinrichtung in beiden möglichen Drehrichtungen des Umlaufregals wirksam ist, da die Richtung wegen eventueller Unlasten nicht vorhersehbar ist.

Wird der Hilfsantrieb In eine Richtung beaufschlagt, beispielsweise durch Drehung einer als manueller Hilfsantrieb dienenden Kurbel, wird zunächst nur der Träger innerhalb des oben bezeichneten Winkelbereich verschwenkt. Mit der Verschwenkung wird die Betätigungseinrichtung beansprucht und lüftet die Bremse. Ist die Betätigungseinrichtung beispielsweise mit Seilzügen gekoppelt, greifen diese an einem Bremshebel an und lüften (öffnen) nach entsprechender Beaufschlagung die Bremse. Dabei kann der Hebel zum Lüften der Bremse bei einem begrenzten Betätigungsweg als Widerlager dienen. Es kann jedoch auch zusätzlich eine Anschlagbegrenzung gegeben sein, die erst nach voll geöffneter Bremse wirkt. Erst wenn die Bremse geöffnet ist, wird die weitere Drehung des Hilfsantriebs als Drehbewegung in den Antriebsmotor und damit in das Umlaufregal eingeleitet. Treibt eine äußere Kraft in Form einer Unlast den Motor schneller bzw. kräftiger an als der Hilfsantrieb, beispielsweise schneller als ein Bediener kurbelt oder ein Handrad dreht, oder wirkt diese in die entgegengesetzte Richtung zum Hilfsantrieb, wird der Lüft-Hebel (z. B. durch Federkraft) In seine Ausgangsposition zurückbewegt und die Bremse schließt sich. Gleiches gilt, wenn der Bediener die Kurbel loslässt. Es kommt zum sofortigen Bremsen und Stillstand der Lagergutträger im Umlaufregal.

Weitere Vorteile, Merkmale und Besonderheiten der Erfindung ergeben sich aus der nachfolgenden Beschreibung bevorzugter, jedoch nicht beschränkender Ausführungsformen anhand der schematischen und nicht maßstabsgetreuen Zeichnungen. Es zeigt:
- Fig.1: eine bevorzugte Ausführungsform des erfindungsgemäßen Umlaufregals in Seitenansicht,
- Fig.2: eine bevorzugte Ausführungsform der Antriebseinheit des erfindungsgemäßen Umlaufregals in perspektivischer Darstellung, und
- Fig.3: eine bevorzugte Ausführungsform der Betätigungseinrichtung in Draufsicht.

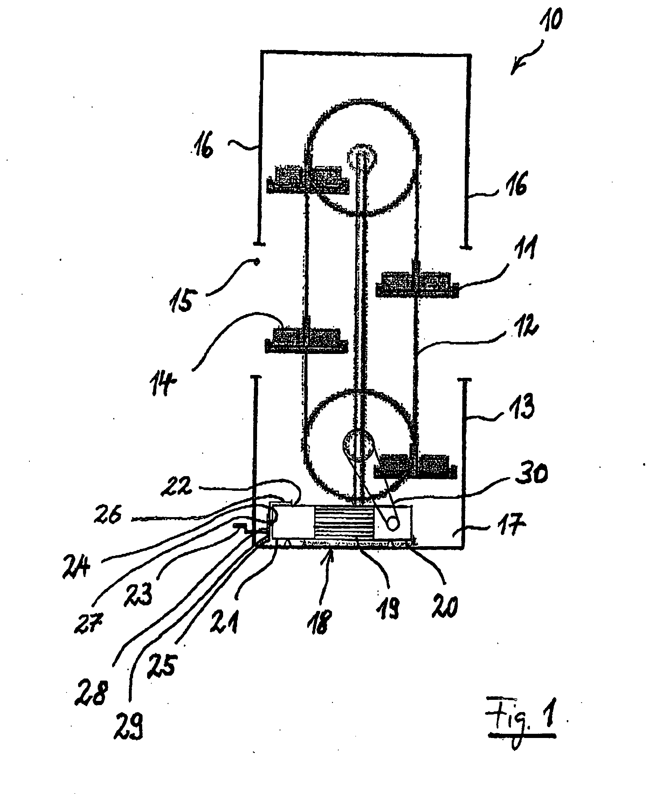

Fig. 1 zeigt eine bevorzugte Ausführungsform des erfindungsgemäßen Umfaufregels 10. Dieses verfügt hier Ober Insgesamt vier (meist mehr) Lagergutträger 11, die an der umlaufenden Lastkette 12 gelagert sind. Das Umlaufregal 10 ist in einem allseitig geschlossenen Gehäuse 13 aufgenommen, wobei der Zugriff auf die In den Lagergutträgern 11 vorgehaltenen Gegenstände 14 über Entnahmeöffnungen 15 erfolgt, die in einer oder beiden Hauptseiten 16 des Umlaufregals 10 vorgesehen sind. Im unteren Bereich 17 des Gehäuses 13 befindet sich die Antriebseinheit 18 für die Lastkette 12. Die Antriebseinheit 18 umfasst in Ausführungsbeispiel einen elektrischen Antriebsmotor 19, der einerseits mit einem Getriebe 20 und andererseits mit einem Hilfsantrieb 21 gekoppelt ist. Das Getriebe 20 ist beispielsweise als Stirn- oder Kegelradgetriebe ausgeführt und nicht selbsthemmend. Zwischen dem Hilfsantrieb 21 und dem Antriebsmotor 10 ist daher eine Bremse 22 für den Antriebsmotor 19 angeordnet, die bei Stromausfall ein unbeabsichtigtes Ablassen der Lagergutträger 11 verhindert. Zudem wirkt die Bremse 22 bei Ausfall des Antriebsmotors 19 einer von der Unlast auf den Lagergutträgern 11 abhängigen, unvorhersehbaren Kraft entgegen und hemmt deren Einleitung in den Hilfsantrieb 21.

Die Bremse 22 wird mit Betätigung des Hilfsantriebs 21 gelüftet, wenn durch Drehung der Kurbel 23 des Hilfsantriebes 21 zunächst ein zentrisch zur Welle 24 des Antriebsmotors 19 angeordneter Träger 25 verschwenkt wird. Dieser Träger 25 ist im Ausführungsbeispiel Ober Sellzüge 26 mit der bremse 22 verbunden, die umgelenkt werden, sodass bereits eine Verschwenkung des Trägers 25 quer zur Welle 24 um 1 bis 10° ausreicht, um die Bremse 22 zu lüften. Zusätzlich zum Träger 25 ist auf dem äußeren Ende 27 der Welle 24 ein erstes Zahnrad 28 angeordnet, das zur Kraftübertragung vom Hilfsantrieb 21 auf die Welle 24 dient und mit einem kurbeibeaufschlagten zweiten Zahnrad 29 in Eingriff steht. Im Ausführungsbeispiel ist der Träger 25 plattenförmig ausgebildet, denkbar ist jedoch auch eine Ausführung in Form eines Lenkers, eines Bügels oder als Schiene jeweils mit Aufnahmen für die Welle 24 und das Zahnrad 29 oder sonstige Antriebselemente. Anstelle des Zahnradantriebes ist selbstverständlich auch die Verwendung von sonstigen form- oder kraftschlüssigen Antrieben, wie beispielsweise von Riemen- oder Kettentrieben denkbar.

Der Hilfsantrieb 21 wird im Ausführungsbeispiel durch eine durch das Gehäuse 13 geführle Kurbel 23 betätigt. Alternativ könnte hier ein Handrad verwendet werden oder ein zusätzlicher elektrischer Hilfsmotor (nicht dargestellt) vorgesehen sein. Der Hilfsantrieb 21 kann unabhängig von der Ausführung, fest mit der Antriebseinheit 18 verbunden sein oder aber erst im Notfall an diese angekoppelt werden. Zur Kraftübertragung von der Antriebseinheit 18 auf die Lastkette 12 ist im Ausführungsbeispiel der Fig. 1 ein Antriebsriemen 30 vorgesehen. Stattdessen können hier jedoch auch sonstige als Antrieb für die Lastkette geeignete Antriebsmittel verwendet werden.

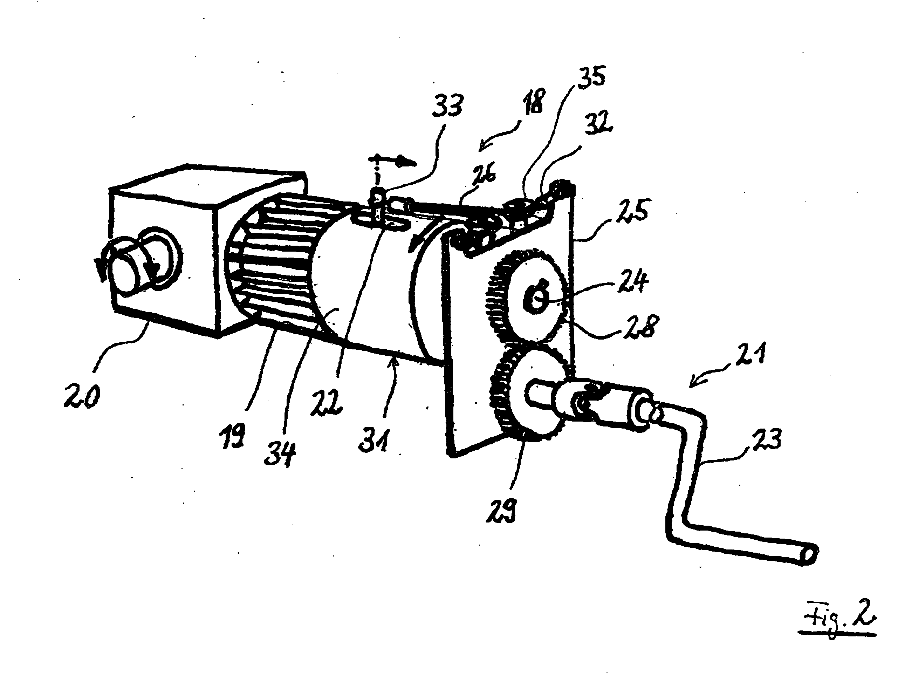

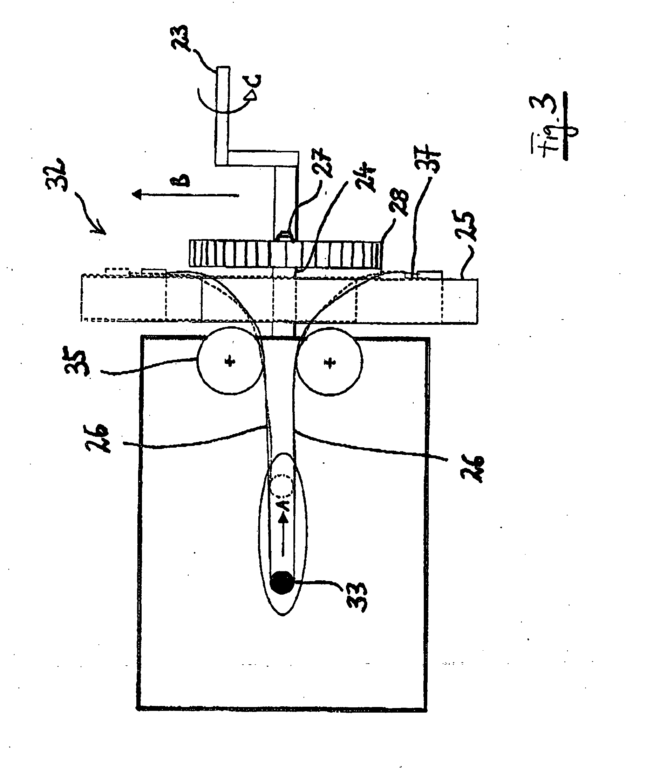

Fig. 2 zeigt eine bevorzugte Ausführungsform der Antriebseinheit 18 des erfindungsgemäßen Umlaufregals 10. Dieses Verfügt im Ausführungsbeispiel Ober einen elektrischen Antriebsmotor 19, der mit dem Getriebe 20 gekoppelt ist. Am vom Getriebe 20 abgewandten Ende 31 des Antriebsmotors 19 ist eine Bremse 22 und ein plattenförmiger Träger 25 mit einer Betätigungseinrichtung 32 für die Bremse 22 angeordnet. Der Träger 25 ist auf der verlängerten Welle 24 des Antriebsmotors 19 angebracht und kann quer zur Welle 24 verschwenkt werden. Zur Kraftübertragung vom kurbelbetätigten Hilfsantrieb 21 auf die Welle 24 des Antriebsmotors 19 ist dem Träger 25 nachgeordnet ein erstes Zahnrad 28 aufgesteckt. Ebenfalls am Träger 25 angebracht ist ein zweites Zahnrad 29, das mit dem ersten, in Eingriff steht und Ober die Kurbel 23 angetrieben wird, sobald der Antriebsmotors 19 aufgrund eines Defekts oder einer Störung ausfällt. Über die Größe der Zahnräder 28, 29 wird die übersetzung des Hilfsantriebes 21 definiert. Um im Notbetrieb zu verhindern, dass unvorhersehbare Kräfte unmittelbar In die Kurbel 23 eingeleitet werden und einen Bediener gefährden, verfügt die Antriebseinheit 18 über die trommelförmige Bremse 22, die unmittelbar auf die Welle 24 des Antriebsmotors 19 wirkt. Die Bremse 22 wird im Notbetrieb dadurch geöffnet, dass ein durch die Verkleidung 34 des Antriebsmotors 19 bzw. der Bremse geführter Bremshebel 33 in Richtung des Trägers 26 verstellt wird (vgl. Flg. 3). Die Betätigung des Bremshebels 33 erfolgt dabei im Ausführungsbeispiel über Seilzüge 26, die einerseits mit dem Bremshebel 33 und andererseits mit dem Träger 25 verbunden sind. Zur Führung der Seilzüge 26 sind Umlenkrollen 35 vorgesehen, die im Bereich des Trägers 25 an der Antriebseinheit 18 montiert sind. Anstelle der Seilzüge ist auch die Verwendung von Gestängen oder eine Betätigung des Bremshebels 33 Ober eine Nockenscheibe oder über einen Schieber denkbar. Die jeweils geeignete Betätigungseinrichtung 32 wird neben der Ausführung der Antriebseinheit auch durch die Einbaumaße des Umlaufregals 10 bestimmt.

Wird im Notbetrieb, beispielsweise bei Stromausfall oder Ausfällen in der Steuerung des Umlaufregals 10 an der Kurbel 23 gedreht, um die Lagergutträger 11 in eine Entnahmeposition vor die Entnahmeöffnung 15 zu verbringen, wird zunächst der Träger 25 verschwenkt, wobei die Bremse 22 zunächst noch eingelegt bleibt. Dabei wird durch die Drehbewegung des Hilfsantriebs 21 die Drehrichtung des Umlaufregals 10 vorgegeben, je nach Drehrichtung einer der Seilzüge 26 beaufsohlagt, der Bremshebel 33 verschoben und anschließend die Bremse 22 gelüftet. Erst nach Lüften der Bremse 22 wird das weitere Kurbelmoment als Drehbewegung in den Antriebsmotor 19 eingeleitet und das Umlaufregal 10 bewegt. Treibt eine äußere Kraft, beispielsweise die auf den Lagergutträgern aufliegende Last den Antriebsmotor 19 stärker an als der Hilfsantrieb 21, schließt sich die Bremse 22 und es kommt zur kontrollierten Unterbrechung der Bewegung des Umlaufregals 10.

Fig. 3 zeigt eine Betätigungseinrichtung 32 für die Bremse 22 der Antriebseinheit 18 (vgl. Fig. 2) in Draufsicht. Die Betätigungseinrichtung 32 weist im Ausführungsbeispiel zwei Seilzüge 26 auf, die einerseits mit dem Bremshebel 33 und andererseits mit den oberen Enden des plattenförmigen Träger 25 verbunden sind. Der Träger 25 ist auf der verlängerten Welle 24 des Antriebsmotors 19 verschwenkbar angeordnet und in Querrichtung zur Welle 24 bzw. dem Wellenstummel 27 schwenkbar. Die Seilzüge 26 verlaufen vom Hebel 33 weg zunächst im Wesentlichen parallel zur Welle 24 und werden dann durch Umlenkrollen 35 zum jeweiligen Ende des Trägers 26 gelenkt. Die Seilzüge 26 sind an die Außenseite 37 des Trägers 25 geführt und dort befestigt, beispielsweise mit Seilschellen.

Über die so gebildete Betätigungseinrichtung 32 wird die Bremse 22 geöffnet, indem der Bremshebel 33 in Richtung des Trägers 25 (Pfeil A) bewegt wird. Diese Betätigung des Bremshebels 33 erfolgt über die Seilzüge 26. Die Schwenkbewegung des Trägers 26 wird dabei In eine lineare Bewegung des Bremshebels 33 umgesetzt und die Bremse 22 mit Beaufschlagung eines der Seilzüge 26 gelüftet. Die Umlenkrollen 35 sind aufrechtstehend benachbart zum Träger 25 an der Antriebseinheit 18 angeordnet. Die Betätigungseinrichtung 32 ist so ausgelegt, dass bereits eine minimale Verschwenkung des Trägers 25, beispielsweise im Bereich zwischen 1 und 10° ausreicht, um die Bremse 22 zu lüften. Die Verschwenkung des Trägers 25 in Pfeilrichtung B, die damit verbundene Bewegung der Seilzüge 26 und die damit eingestellte Position des Bremshebels 33 bei gelüfteter Bremse 22 ist in Fig. 3 durch Strichlinien dargestellt. Eine Betätigung der Bremse 22 erfolgt erst durch Beaufschlagung des Hilfsantriebes 21 in eine der beiden möglichen Drehrichtungen (Pfeil C). Aufgrund der Ausführung mit zwei Seilzügen 26 bzw. mit in zwei Richtungen verschwenkbarem Träger 26 kann die Beaufschlagung des Hilfsantriebes 21 bei gleicher Wirkung in Pfeilrichtung C sowie gegenläufig dazu erfolgen. Eine Beaufschlagung des Hilfsantriebes 21 erfolgt ebenfalls durch Drehung der Kurbel 23 in Pfeilrichtung C. Durch diese Drehung wird, bei angelegter Bremse 22 zunächst nur der Träger 26 innerhalb des oben bezeichneten Winkelbereichs verschwenkt. Mit der Verschwenkung wird die Betätigungseinrichtung 32 über die Seilzüge 26 beaufschlagt und lüftet die Bremse 22 durch Ziehen am Bremshebel 33, der sich bis dahin in seiner Ausgangs- oder Schließposition befindet.

Erst wenn die Bremse 22 vollständig geöffnet ist, wird die weitere Drehbewegung der Kurbel 23 über das Vorgelege 28/29 als Drehmoment in den Antriebsmotor 19 eingeleitet. Falls eine äußere Kraft, beispielsweise die Gewichtskraft von auf Lagergutträgern 11 gelagerten Gegenstände 14 oder das Eigengewicht der Lagergutträger 11 bzw. der sonstigen beweglichen Teile des Umlaufregal 10 den Antriebsmotor 19 stärker antreibt als dies über den Hilfsantrieb 21 möglich ist, geht der Träger 25 durch das Reaktionsmoment In die Mittelstellung und die Bremse 22 wird durch Rückkehr des Hebels 33 in seine Schließposition sofort geschlossen, sodass das Umlaufregal 10 zum Stillstand gelangt.

**Bezugszeichenliste**

| | | | |
|---|---|---|---|
| 10 | = Umlaufregal | 24 | = Welle |
| 11 | = Lagergutträger | 25 | = Träger |
| 12 | = Lastkette | 26 | = Seilzug |
| 13 | = Gehäuse | 27 | = äußeren Ende |
| 14 | = Gegenstand | 28 | = erstes Zahnrad |
| 15 | = Entnahmeöffnung | 29 | = zweiten Zahnrad |
| 16 | = hauptseite | 30 | = Antriebsriemen |
| 17 | = unterer Bereich | 31 | = abgewandtes Ende |
| 18 | = Antriebseinheit | 32 | = Betätigungseinrichtung |
| 19 | = Antriebsmotor | 33 | = Bremshebel |
| 20 | = Getriebe | 34 | = Verkleidung |
| 21 | = Hilfsantrieb | 35 | = Umlenkrolle |
| 22 | **=** Bremse | 37 | = Außenseite |
| 23 | = Kurbel | | |

## Patentansprüche

1. Umlaufregal (10) mit einem Antriebsmotor; (19) mit einer lüftbaren Bremse (22) und einem an der Welle (24) des Antriebsmotors (19) anbringbaren, insbesondere zwei Drehrichtungen aufweisenden Hilfsantrieb (21), **dadurch gekennzeichnet, dass** ein auf oder an der Welle (24) des Antriebsmotors (19) angeordneter, mit einer Betätigungseinrichtung (32) für die Bremse (22) gekoppelter, insbesondere in Form einer Platte ausgebildeter Träger (25) vorgesehen ist und der Träger (25) quer zur Welle (24) verschwenkbar ausgebildet ist, wobei durch Verschwenkung des Trägers (25) die Betätigungseinrichtung (32) beaufschlagt ist.

2. Umlaufregal (10) nach Anspruch 1, **dadurch gekennzeichnet, dass** zum Lüften der Bremse (22) ein Hebel (33) vorgesehen ist.

3. Umlaufregal (10) nach Anspruch 1 oder 2, **dadurch gekennzeichnet, dass** eine Verschwenkung des Trägers (25) um 1 bis 10°, insbesondere um 1 bis 8°, bevorzugt um 1 bis 5° vorgesehen ist.

4. Umlaufregal (10) nach einem der Ansprüche 1 bis 3, **dadurch gekennzeichnet, dass** der Träger (25) zwei Schwenkrichtungen aufweist, wobei durch Verschwenkung in eine der Richtungen die Bremse (22) geöffnet ist.

5. Umlaufregal (10) nach einem der vorhergehenden Ansprüche, **dadurch gekennzeichnet, dass** die Betätigungseinrichtung (32) Seilzüge (26) aufweist und Umlenkrollen (35) für die Seilzüge (26) vorgesehen sind.

6. Umlaufregal (10) nach Anspruch 5, **dadurch gekennzeichnet, dass** die Umlenkrollen (35) aufrechtstehend benachbart zum Träger (25) angeordnet sind.

7. Umlaufregal (10) nach einem der vorhergehenden Ansprüche, **dadurch gekennzeichnet, dass** der Hilfsantrieb (21) als Kurbel (23), Handrad oder Hilfsmotor ausgebildet ist,

8. Umlaufregal (10) nach einem der vorhergehenden Ansprüche, **dadurch gekennzeichnet, dass** der Hilfsantrieb (21) zur Kraftübertragung auf die Welle (24) einen am Träger (25) angeordneten Zahn-, Ketten oder Riementrieb aufweist.

## Claims

1. Carousel system (10) with a drive motor (19) with a releasable brake (22) and an auxiliary drive (21) which can be attached to the shaft (24) of the drive motor (19), in particular having two directions of rotation, **characterised in that** a support (25) is provided, which is arranged on or at the shaft (24) of the drive motor (19) and coupled to an actuating device (32) for the brake (22), in particular in the form of a plate, and the support (25) is configured pivotable transversely to the shaft (24), wherein by pivoting of the support (25), the actuating device (32) is applied.

2. Carousel system (10) according to claim 1, **characterised in that** a lever (33) is provided for releasing the brake (22).

3. Carousel system (10) according to claim 1 or 2, **characterised in that** provision is made for a pivoting of the support (25) of between 1 and 10°, in particular between 1 and 8°, preferably between 1 and 5°.

4. Carousel system (10) according to any one of claims 1 to 3, **characterised in that** the support (25) has two pivoting directions, wherein the brake (22) is opened by pivoting in one of said directions.

5. Carousel system (10) according to any one of the preceding claims, **characterised in that** the actuating device (32) has cable pulls (26) and deflection pulleys (35) are provided for the cable pulls (26).

6. Carousel system (10) according to claim 5, **characterised in that** the deflection pulleys (35) are arranged in an upright position adjacent to the support (25)

7. Carousel system (10) according to any one of the preceding claims, **characterised in that** the auxiliary drive (21) is configured as a crank (23), hand wheel or auxiliary motor.

8. Carousel system (10) according to any one of the preceding claims, **characterised in that** for transmitting forces to the shaft (24), the auxiliary drive (21) has a gear drive, chain drive or belt drive arranged on the support (25).

## Revendications

1. Magasin ou rayonnage de stockage rotatif (10) comprenant un moteur d'entraînement (19) avec un frein (22) déblocable et avec un entraînement auxiliaire (21) pouvant être placé sur l'arbre (24) du moteur d'entraînement (19) et présentant notamment deux sens de rotation, **caractérisé en ce qu'**il est prévu un support (25), notamment réalisé sous la forme d'une plaque, qui est agencé sur ou au niveau de l'arbre (24) du moteur d'entraînement (19) et est couplé à un dispositif d'actionnement (32) pour le frein (22), et le support (25) est conçu de manière à pouvoir pivoter transversalement à l'arbre (24), le pivotement du support (25) faisant fonctionner le dispositif d'actionnement (32).

2. Magasin ou rayonnage de stockage rotatif (10) selon la revendication 1, **caractérisé en ce que** pour débloquer le frein (22), il est prévu un levier (33).

3. Magasin ou rayonnage de stockage rotatif (10) selon la revendication 1 ou la revendication 2, **caractérisé en ce qu'**il est prévu un pivotement du support (25) de 1 à 10°, notamment de 1 à 8°, et de préférence de 1 à 5°.

4. Magasin ou rayonnage de stockage rotatif (10) selon l'une des revendications 1 à 3, **caractérisé en ce que** le support (25) présente deux directions de pivotement, le pivotement dans l'une des directions conduisant à l'ouverture du frein (22).

5. Magasin ou rayonnage de stockage rotatif (10) selon l'une des revendications précédentes, **caractérisé en ce que** le dispositif d'actionnement (32) comprend des tirants à câble (26), et des poulies de renvoi (35) sont prévues pour les tirants à câble (26).

6. Magasin ou rayonnage de stockage rotatif (10) selon la revendication 5, **caractérisé en ce que** les poulies de renvoi (35) sont agencées verticalement au voisinage du support (25).

7. Magasin ou rayonnage de stockage rotatif (10) selon l'une des revendications précédentes, **caractérisé en ce que** l'entraînement auxiliaire (21) est réalisé en tant que manivelle (23), volant ou moteur auxiliaire.

8. Magasin ou rayonnage de stockage rotatif (10) selon l'une des revendications précédentes, **caractérisé en ce que** l'entraînement auxiliaire (21) comprend, pour la transmission de force à l'arbre (24), un système de transmission à roue dentée, à chaîne ou à courroie, agencé sur le support (25).
